# EUROPÄISCHE PATENTANMELDUNG

(11) **EP 2 251 571 A2**
(43) Veröffentlichungstag der Anmeldung: **17.11.2010**
(21) Anmeldenummer: 10162943.4
(22) Anmeldetag: 17.05.2010
(51) Int. Cl.: F16J 15/02

(54) **Dichtelement**

(30) Priorität: 15.05.2009 DE 102009025810
(71) Anmelder: Kroll & Ziller GmbH & Co. KG, 40721 Hilden (DE)
(72) Erfinder: Kowalewski, Ulrich, 41238 Mönchengladbach (DE)
(74) Vertreter: Christophersen & Partner

(57) **Zusammenfassung**

Es wird ein Dichtelement zum Einsatz in wasserführenden Anlagen beansprucht, der einem Dichtkörper mit daran ausgebildeter, zur Anlage an der abzudichtenden Fläche bestimmte Dichtbereichen aufweist und das dadurch gekennzeichnet ist, dass der Dichtkörper und/oder die Dichtflächen (3) Partikel eine antimikrobiell und/oder antifungizid wirkende Komponente in feinteiliger Form aufweisen.

## Beschreibung

Die vorliegende Erfindung betrifft ein Dichtelement auf Basis einer elastomeren Grundmasse, insbesondere zum Einsatz in wasserführenden Systemen, bestehend aus einem elastischen Grundkörper und einer daran ausgebildeten Dichtfläche aus einer elastomeren Grundmasse.

Dichtungen haben in der Technik die Aufgabe, ungewollte Stoffübergänge von einem Raum in einen anderen zu verhindern bzw. zu begrenzen. In wasserführenden Systemen und Anlagen werden in der Regel Rohrsysteme und Anlagenteile über entsprechende Kupplungssysteme miteinander verbunden. Um ein Austreten des Wassers aus dem System zu vermeiden, werden die einzelnen Kupplungselemente oder angeschlossene Bauteile mit Dichtungen versehen. Zum anderen finden sich in vielen Komponenten zusätzliche integrierte Anwendungen. Bei diesen Dichtungselementen, die das Austreten von Wasser verhindern sollen, handelt es sich in der Regel um Elemente aus elastomeren Grundmassen, z. B. um elastomere Gummimaterialien.

Die elastomeren Gummimaterialien haben den Nachteil, dass sie einen guten Nährboden für Mikroorganismen bilden. Insbesondere auf Flächen, die mit Feuchtigkeit, Wasser oder wässrigen Flüssigkeiten in Kontakt kommen, bildet sich relativ schnell ein Überzug aus biologischem Bewuchs. Dieser biologische Bewuchs reagiert zum einen mit den in der elastomeren Masse enthaltenen Weichmachern, was bewirkt, dass die Weichmacher herausgelöst werden und die Haltbarkeit der Dichtung beeinträchtigt wird. Problematisch ist zudem, dass der biologische Bewuchs in Einlagen der Lebensmittelindustrie aus hygienischen Gründen unerwünscht ist.

Aus Anwendungen im medizinischen Bereich ist die antimikrobielle Wirkung von Silber bzw. Silberoxid bekannt, das insbesondere als so genanntes Nanosilber dort Anwendung findet. In der EP 1 932 890 wird beispielsweise eine Dispersion offenbart, welche Silberpartikel enthält und zur Behandlung von Oberflächen eingesetzt wird. Diese Silberpartikel enthaltende Dispersion wird auf eine zu behandelnde Oberfläche aufgebracht, üblicherweise aufgesprüht. Die Oberflächenbehandlung soll die Oberfläche schneller und zugleich mit lang anhaltender Wirkung derart desinfizieren, dass die Ausbildung von Gerüchen wirksam gehemmt wird.

Wasserführende Systeme zeichnen sich üblicherweise dadurch aus, dass sie kontinuierlich mit Wasser gefüllt sind, d. h. die Dichtungen werden kontinuierlich von Wasser umspült und kommen kontinuierlich mit neuen Mikroorganismen in Kontakt. Der sich bildende Belag greift, wie bereits beschrieben, die Dichtungen an und beeinträchtigt somit die Anlagensicherheit. In Trinkwasseranlagen ist dieser Belag aus hygienischen Gründen nachteilig. Die wasserführenden Systeme, insbesondere Rohrleitungssysteme, werden häufig auch im Tiefbau verlegt, d. h. es ist nicht möglich, schadhafte bzw. kontaminierte Dichtungen ohne weiteres auszutauschen. Dichtungen, die in wasserführenden Anlagen eingesetzt werden, müssen daher mehrere Eigenschaften erfüllen, sie müssen über einen langen Anwendungszeitraum beständig sein, in Trinkwasseranlagen sollte ein Bakterienbewuchs über den gesamten Anwendungszeitraum möglichst vollständig vermieden werden.

Der Erfindung lag die Aufgabe zugrunde, ein Dichtelement zur Verfügung zu stellen, das die aus dem Stand der Technik bekannten Nachteile nicht aufweist, insbesondere aber die Ablagerung von Mikroorganismen in den Bereichen, die mit dem Wasser in Kontakt kommen, zumindest weitgehend verhindert ohne die Wasserqualität nachteilig zu verändern.

Gegenstand der vorliegenden Erfindung ist demgemäß ein Dichtelement zum Einsatz in wasserführenden Anlagen aus einem Dichtkörper auf Basis einer elastomeren Grundmasse mit daran ausgebildeter, zur Anlage an der abzudichtenden Fläche bestimmte Dichtbereichen, das dadurch gekennzeichnet ist, dass der Dichtkörper und/oder die Dichtbereiche eine antimikrobiell und/oder antifungizid wirkende Komponente in feinteiliger Form aufweisen.

Es wurde festgestellt, dass das erfindungsgemäße Dichtelement über einen langen Zeitraum eine antimikrobielle Wirkung zeigt, sodass ein Belag von Mikroorganismen weitgehend verhindert werden kann.

Als antimikrobiell und/oder antifungizid wirkende Wirkstoffe werden vorzugsweise antimikrobiell und/oder antifungizid wirkende Metalle und Metallverbindungen eingesetzt. Insbesondere können die Metalle und Metalloxide genannt werden, vorzugsweise werden diese ausgewählt aus der Gruppe bestehend aus Silber, Silberoxid, Kupfer, Kupferoxid, Zink, Zinkoxid und Gemischen daraus. Für den antimikrobiellen und antibakteriellen Einsatz sind Silber und Silberoxid bevorzugt, für die antifungizide Wirkung werden Kupfer und/oder Silber oder deren Oxide eingesetzt, wobei hinsichtlich der antifungiziden Wirkung Kupfer bevorzugt ist.

Für die antimikrobielle Wirkung sind Silberverbindungen besonders bevorzugt, da diese Materialien im Wesentlichen nicht vom menschlichen Körper absorbiert werden. Sie entfalten ihre Wirkung nicht im Körper und sind daher nicht giftig.

Die antimikrobiell und/oder antifungizid wirkende Komponente liegt erfindungsgemäß in feinteiliger Form vor. Je nach Zubereitungsform kann die aktive Komponente nanoskaliger Form vorliegen, aber auch mittlere Teilchendruchmesser im µm-Bereich umfassen.

Die antimikrobiell und/oder antifungizid wirkende Komponente kann als Wirkstoff selbst, d.h. in Form des Metalls oder einer Metallverbindung, und/oder mit einem Material, dass die Handhabbarkeit bzw. Verarbeitbarkeit des Wirkstoffs verbessert, wie einem geeigneten Trägermaterial eingesetzt werden.

In einer möglichen Ausführungsform wird die antimikrobiell und/oder antifungizid wirkende Komponente in nanoskaliger Form eingesetzt, beispielsweise als Wirkstoff selbst oder mit einem Matrixmaterial, vorzugsweise einem Material, das erst in Gegenwart der Wirkstoffverbindung gebildet wird, wie beispielsweise in der EP 1 846 327 B1 beschrieben. In dieser Ausführungsform hat sich ein mittlerer Teilchendurchmesser von 1 bis 100 nm, insbesondere von 5 bis 50 nm, als geeignet erwiesen. Wird als Wirkstoff Silber oder eine Silberverbindung verwendet wird, wird das nanoskalige Silber häufig auch kurz als Nanosilber bezeichnet.

In einer besonderen Ausgestaltung kann als Wirkstoffkomponente mit Wirkstoff dotiertes poröses Siliziumdioxid eingesetzt werden. Die Herstellung eines solchen Materials kann beispielsweise aus einer Vorstufe für Siliziumdioxid in Gegenwart der Wirkstoff oder einer Vorstufe davon erfolgen, indem ein Gemisch aus den Reaktionskomponenten in an sich bekannter Weise in Siliziumdioxid und ggf. die Vorstufe der Wirkstoff in den Wirkstoff umgesetzt werden. Bei dieser Reaktion bildet sich das Siliziumdioxidgerüst aus, wobei die Wirkstoff gleichzeitig eingelagert wird. In einer besonders bevorzugten Ausführungsform werden die Teilchen durch eine Flammen-Sprüh-Pyrolyse erhalten. Ein mögliches Herstellungsverfahren für derartige mit Metall oder Metallverbindungen enthaltenden Materialien wird im europäischen Patent EP 1 846 327 B1 beschrieben.

In einer weiteren möglichen Ausführungsform kann der antimikrobiell und/oder antifungizid wirkende Wirkstoff auf ein Trägermaterial aufgebracht werden. Das Trägermaterial ist vorzugsweise ein teilchenförmiges Material mit großer Oberfläche und wirkt quasi als Reservoir für den Wirkstoff, aus welchem diese freigesetzt wird. Als geeignete Träger-/Matrixmaterialien haben sich anorganische Silikate, Siliziumdioxid, Bentonite, Zeolite, etc. erwiesen. Die Trägermaterialien sollten eine solche Teilchengröße aufweisen, dass mechanischen Eigenschaften des Dichtelements weitgehend unverändert bleiben. Es haben sich Teilchengrößen des Trägermaterials zwischen 1 und 10 µm als geeignet erwiesen. Vorzugsweise liegt die mittlere Teilchengröße (bestimmt durch Laserverfahren) der geträgerten antimikrobiell wirkenden Komponente zwischen 4 und 9 µm.

Als besonders geeignete Trägermaterialien haben sich Zeolite erwiesen. Diese können hergestellt werden durch den teilweise oder vollständigen Ersatz von austauschbaren Ionen in Zeoliten mit Ammoniumionen und antimikrobiell wirkenden Ionen. Derartige Substanzen sind aus den US-Patenten 4,938,598 und 4,911,898 bekannt. Zu ihrer Herstellung können entweder natürlich vorkommende oder synthetische Zeolite eingesetzt werden. Zeolit ist ein Aluminosilicat mit einer dreidimensionalen Struktur, die im Wesentlichen durch die Formel XM₂-nO-Al₂O₃-XSiO₂-ZH₂O dargestellt werden kann. In dieser Formel bedeutet M ein Ionenaustauschbares Ion, im Allgemeinen ein einwertiges oder zweiwertiges Metallion, n die Valenz des Metall-ions, X und Y stehen für die entsprechenden Koeffizienten des Metalloxids bzw. des Siliziumdioxid, und Z bedeutet die Anzahl des Kristallwassers. Beispiele für geeignete Zeolite sind Zeolite vom A-Typ, X-Typ, Y-Typ, D-Typ sowie Zeolite mit hohem Siliciumdioxid-Anteil, Sodalit, Mordenit, Analcit, Clinoptilolit, Chabazit und Erionit. Es können auch weitere Zeolit-Typen und Mischungen von verschiedenen Zeoliten eingesetzt werden.

Übliche Austauschkapazitäten dieser Zeolite sind wie folgt: A-Zeolit: 7 meq/g; Zeolit vom X-Typ = 6,4 meq/g, Zeolit vom Y-Typ = 5 meq/g, Zeolit vom T-Typ = 3,4 meq/g, Sodalit = 11,5 meq/g, Mordenit = 2,6 meq/g, Analcit = 5 meq/g, Clinoptilolit = 2,6 meq/g, Chabazit = 5 meq/g und Erionit = 3,8 meq/g. Diese Ionenaustauscherkapazitäten sind ausreichend, dass der Ionenaustausch mit Ammonium und antimikrobiell wirkenden Metallionen stattfindet.

Die spezifische Oberfläche der hier bevorzugt eingesetzten Zeolitpartikel liegt vorzugsweise bei mindestens 150 m²/g (wasserfreies Zeolit als Standard). Das Verhältnis SiO₂/Al₂O₃ (MolVerhältnis) in der Zeolitzusammensetzung ist vorzugsweise kleiner als 14, besonders bevorzugt kleiner als 11.

Die in den antimikrobiell wirkenden Zeoliten antimikrobiellen Metallionen sollten während der Ionenaustauschreaktion auf den Zeolitpartikeln zurückgehalten werden. Antimikrobiell wirkende Metallionen, die adsorbiert oder ohne Austauschreaktion verbunden werden, zeigen eine geringere bakterizide Wirkung und ihre antimikrobielle Wirkung ist nicht langanhaltend.

Um allerdings eine schnelle antimikrobielle Wirkung zu erreichen, ist es dennoch vorteilhaft, dass eine ausreichende Menge an Metallionen auf der Oberfläche absorbiert sind.

In dem Prozess des Ionenaustausches neigen einige antimikrobielle Metallionen dazu, in ihre entsprechenden Oxide, Hydroxide, basischen Salze etc. entweder in den Mikroporen oder auf den Oberflächen der Zeolite umgewandelt zu werden oder auch dort abgelagert zu werden, insbesondere, wenn die Konzentration der Metallionen in der Nachbarschaft der Zeolitoberfläche hoch ist. Eine solche Ablagerung beeinträchtigt die antimikrobiellen Eigenschaften der entsprechenden Zeolite.

In einer besonders bevorzugten Ausführungsform der vorliegenden Erfindung wird ein relativ geringer Anteil an Ionenaustausch eingesetzt, um optimale antimikrobielle Eigenschaften zu erreichen. Man geht davon aus, dass es notwendig ist, dass mindestens ein Teil der Zeolitpartikel Metallionen mit bakteriellen Eigenschaften an den Ionenaustauscher stellendes Zeolits in einer Menge, die geringer ist als die lonenaustauschsättigungskapazität des Zeolits, gehalten werden sollten. In einer Ausführungsform enthält ein verwendetes Zeolit antimikrobiell wirkende Metallionen in einer Menge bis zu 41 %, bezogen auf die theoretische Ionenaustauschkapazität des Zeolits. Derartige ionenausgetauschte Zeolite mit einem relativ geringen Anteil an Ionenaustausch können durch Durchführen eines Ionenaustausches unter Verwendung einer Metallionenlösung mit einer relativ geringen Konzentration, verglichen mit üblicherweise für den Ionenaustausch verwendeten Metallionen eingesetzt werden.

Das antimikrobiell wirkende Metall bzw. die Metallverbindung ist vorzugsweise in einer Menge von etwa 0,1 bis 20 Gew.-% bezogen auf das Zeolit, enthalten. In einer möglichen Ausführungsform enthält das Zeolit von 0,1 bis 20 Gew.-% Silberionen und von 0,1 bis 20 Gew.-% Kupfer oder Zinkionen. Auch Ammoniumionen können in dem Zeolit enthalten sein, in der Regel in einer Konzentration von etwa 20 Gew.-% oder darunter, bezogen auf das Zeolit. Es wird bevorzugt, den Gehalt an Ammoniumionen auf eine Menge von 0,5 bis 15 Gew.-%, bevorzugt von 1,5 bis 5 Gew.-% zu begrenzen. Sofern hier der Begriff Gew.-% verwendet wird, betrifft er Materialien, die bei Temperaturen von 110 °C, 250 °C oder 550 °C, da die im Anschluss an die Herstellung durchgeführte Trocknung vorzugsweise bei diesen Temperaturen durchgeführt wird.

Ein bevorzugtes antimikrobiell wirkendes Zeolit ist ein Zeolit vom Typ A, welches entweder eine Kombination aus Silber, Zink und Ammonium oder Silber und Ammonium als ausgetauschte Substanzen enthält. Ein solches Zeolit ist beispielsweise erhältlich von Shinagawa, Inc. unter der Handelsbezeichnung AW-10N und enthält 0,6 Gew.-% Silber in einem ionenausgetauschten Zeolit vom Typ A mit einem Teilchendurchmesser von etwa 2,5 µm. Ein anderes Handelsprodukt ist AJ-10N, welches etwa 2 Gew.-% ionenausgetauschtes Silber in Zeolitteilchen vom Typ A mit einem Durchmesser von 2,5 µm enthält. Eine weitere Formulierung unter der Bezeichnung AW-80 enthält 0,6 Gew.-% ionenausgetauschtes Silber in Zeolitteilchen vom Typ A mit einem Teilchendurchmesser von etwa 1,0 µm. Eine weitere geeignete Formulierung ist unter der Handelsbezeichnung AJ-80N vertriebene, die etwa 2 Gew.-% ionenausgetauschtes Silber auf Zeolitteilchen vom Typ A mit einem Teilchendurchmesser von etwa 1,0 µm enthält. Diese Zeolite enthalten ca. zwischen 0,5 und 2,5 Gew.-% ionenausgetauschtes Ammonium.

Die Konzentration an antimikrobiell und/oder antifungizid wirkendem Wirkstoff hängt vom Wirkstoff selbst und vom Verwendungszweck des Dichtelements ab. Üblicherweise beträgt die Konzentration des Wirkstoffs (ohne ggf. vorhandenes Trägermaterial) in einem Dichtelement vorzugsweise von 0,05 bis 1,5 Gew.-%, bezogen auf das Gewicht des Dichtelements, insbesondere von 0,1 bis 1 Gew.-%. So bezieht sich die bevorzugt eingesetzte Menge für die oben genannten Metalle und Metallverbindungen auf diese Metall und Metallverbindungen.

Die erfindungsgemäß eingesetzte antimikrobiell und/oder antifungizid wirkende Komponente kann in die elastomere Grundmasse eincompoundiert werden und/oder direkt auf die Oberfläche der Dichtung aufgebracht werden.

Das Basismaterial des erfindungsgemäßen Dichtelements ist üblicherweise eine elastomere Grundmasse, wie beispielsweise Gummi- und Kautschukmaterialien aus natürlichen und synthetischen Kautschukmassen, die üblicherweise in einem ersten Verfahrensschritt einem Formgebungsverfahren unterzogen und anschließend vulkanisiert werden. Beispiele für geeignete Basismaterialien sind Elastomere auf Basis von Acrylnitril oder Styrol und Butadien bzw. Butadienderivaten, wie Acrylnitril-Butadien-Kautschuk (NBR), hydrierter Acrylnitril-Butadien-Kautschuk (HNBR), Styrol-Butadien-Kautschuk (SBR), Ethylen-Propylen-Dien-Kautschuk usw. einschließlich Mischungen der voranstehenden, ggf. auch mit weiteren Elastomeren, wobei Acrylnitril-Butadien-Kautschuk und Ethylen-Propylen-Dien-Kautschuk besonders bevorzugt sind.

In einer bevorzugten Ausgestaltung wird die antimikrobiell und/oder antifungizid wirkende Komponente der Kautschukmasse vor der Vulkanisierung zugemischt. Die Komponente wird in dieser Ausgestaltung bereits bei der Herstellung der elastomeren Grundmasse zugesetzt, in der Regel gemeinsam mit weiteren Zuschlagstoffen. Diese erhaltene Mischung kann in an sich bekannter Weise den Formgebungsverfahren der Gummiverarbeitung wie beispielsweise Spritzguss, Extrusion und Pressformen unterzogen werden. Das erhaltene, vorgeformte Produkt wird anschließend vulkanisiert. Auf diese Weise ist es möglich, eine gleichmäßige Verteilung der antimikrobiellen Komponenten in der elastomeren Grundmasse zu erhalten bzw. die Kontaktzone separat auszurüsten z.B im Coextrusionsverfahren für Profile und Schläuche oder Liner für Kompensatoren.

In einer weiteren Ausführungsform ist es auch möglich, die Oberflächen der Dichtung oder einen Teil davon, zumindest den Teil, welcher in wasserführenden Anlagen mit Wasser in Kontakt kommt, mit der antimikrobiell und/oder antifungizid wirkenden Komponente zu beschichten, d. h. die Komponente in der gewünschten Menge auf diese Flächen aufzubringen. Das Aufbringen der antimikrobiellen Komponente auf diese Oberflächen kann durch Druckverfahren, Tauchverfahren, Aufsprühen oder Anstreichen erfolgen. Bei den genannten Konzentrationen an Wirkstoff wird in der Regel eine sehr dünne Auflage erhalten, die keine negative Beeinflussung des Elastitätsverhaltens des Grundkörpers und somit im Abdichtverhalten bewirkt. Es ist nicht erforderlich, dass die Auflage als geschlossene Beschichtung vorliegt.

Das erfindungsgemäße Dichtelement kann die Form einer beliebigen, aus dem Stand der Technik bekannten Dichtung aufweisen und die Funktion von statischen Dichtungen, dynamischen Dichtungen, translatorischen Dichtungen, rotatorischen Dichtungen und auch in berührungslosen Dichtungen.

Insbesondere im Bereich der gesteckten Verbindung von Rohrleitungen und zur Abdichtung dieser Verbindungsstellen stellen O- Ringe, Muffendichtungen (z.B Type TYTON und ähnliche) sowie Dichtlippen in Kupplungssystemen ( z.B Type REKA und ähnliche) die wichtigste Gruppe dar. Daneben spielen Flachdichtungen für geschraubte Verbindungen eine wichtige Rolle.

Zum Verschließen von kleineren Öffnungen werden häufig so genannte Dichtmassen verwendet, die auch unter den Oberbegriff Dichtelement gemäß der vorliegenden Erfindung fallen.

Ein weiterer Gegenstand der vorliegenden Erfindung betrifft die Verwendung Compounds aus einem anorganischen Träger-/Matrixmaterial und eines antimikrobiell wirkenden Wirkstoffs in einem Dichtelement zum Einsatz in wasserführenden Anlagen.

Der antimikrobiell wirkende Wirkstoff weist vorzugsweise ein Metall oder eine Metallverbindung auf, welche auf einem anorganischen Träger oder Matrixmaterial aufgebracht ist. Besonders bevorzugt ist das anorganische Trägermaterial wie oben beschrieben ein Siliziumdioxid, welches durch Sprüh- oder Flammenpyrolyse in Gegenwart des Metalls oder der Metallverbindung oder einer Vorstufe davon hergestellt worden ist.

Weitere Einzelheiten werden nachfolgend anhand der Zeichnungen erläutert, auf der ein Ausführungsbeispiel einer Flanschdichtung dargestellt ist. Es zeigt
- Fig. 1: einen Schnitt durch eine Dichtung und abgedichtete Fläche,
- Fig. 2: eine aufgeschnittene Runddichtung,
- Fig. 3: in einer halbierten Querschnittsdarstellung eine Flanschverbindung mit darin eingesetzter Flanschdichtung,
- Fig. 4: das Detail II in Fig. 3 in vergrößertem Maßstab,
- Fig. 5: in einer Einzeldarstellung die Flanschdichtung nach Fig. 3 im Querschnitt.

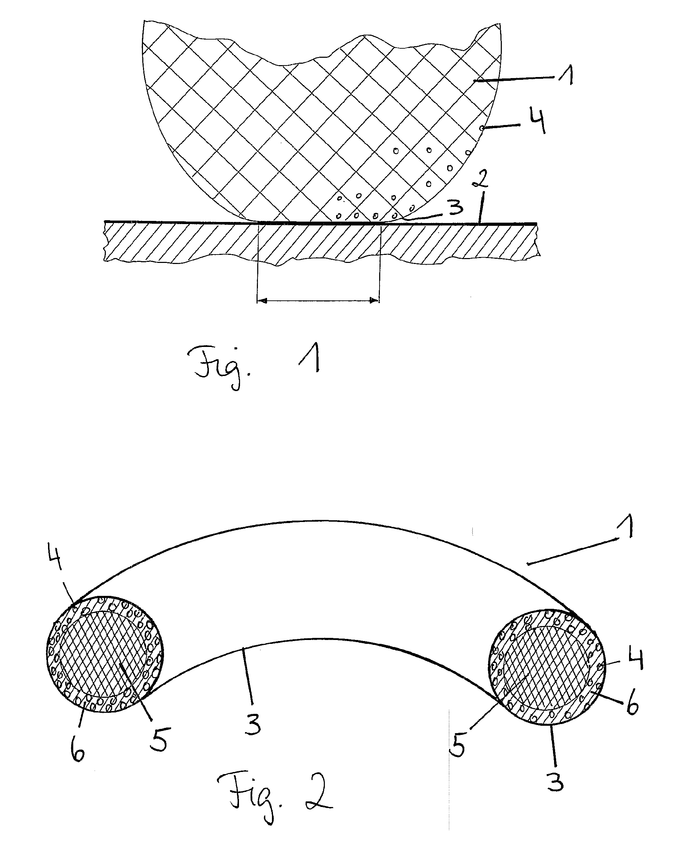

In Fig. 1 ist ein Schnitt durch eine Dichtung 1 aus einem elastomeren Material und eine abgedichtete Fläche 2 dargestellt. Wenn der Teil der Dichtfläche 3, der nicht unmittelbar auf der abzudichtenden Fläche aufliegt, regelmäßig in Kontakt ist mit Wasser oder Feuchtigkeit, auch aus der Umgebungsluft, setzen sich bevorzugt auf der Dichtfläche 3 ab. Das Wachstum eines Belages an Mikroorganismen auf der Dichtfläche 3 wird durch die in das Dichtmaterial eincompoundierte antimikrobiell und/oder antifungizid wirkende Komponente weitgehend verhindert. In Fig. 1 ist die antimikrobiell und/oder antifungizid wirkende Komponente 4 im Verhältnis zur Dichtung in vergrößertem Maßstab dargestellt. Auch sind nur einige der Partikel der antimikrobiell und/oder antifungizid wirkenden Komponente dargestellt, die keine Wiedergabe der tatsächlichen Verteilung in einer tatsächlichen Ausführung darstellen. Auf einem anorganischen Material als Träger-/Matrixkomponente aufgebracht bzw. eingearbeitet ist. Ein solches Material ermöglicht eine lang anhaltende antimikrobielle Wirkung.

In Fig. 2 ist eine aufgeschnittene Ringdichtung dargestellt, in welcher das Dichtmaterial aus zwei koextrudierten Komponenten besteht, nämlich einem innenliegenden Material als Kern 5 und einem diesen Kern 5 umgebenden äußeren Material 6, dessen äußere Oberfläche die Dichtfläche 3 bildet. Das äußere Material 6 enthält die antimikrobiell wirkende Komponente 4. In dieser Ausgestaltung wird die Einarbeitung der antimikrobiell wirkenden Komponente auf die Bereiche beschränkt, wo ein unmittelbarer Kontakt mit Wasser oder Feuchtigkeit erfolgt. Üblicherweise kommen die Bereiche des Kerns nicht mit dem Wasser in Kontakt, auch geht man davon aus, dass die antimikrobiell wirkende Komponente, sofern sie in Partikelform eingearbeitet wird, nicht vom Kern in die äußeren Bereiche 6 der Dichtung 1 wandern. Dieser Ausgestaltung ist es möglich, in Abhängigkeit von den Material- und Produktionskosten die antimikrobiell wirkende Komponente nur in den äußeren Bereichen der Dichtung 1 einzuarbeiten und im Kern 5 einzusparen.

Der Fachmann wird anhand von wirtschaftlichen Erwägungen entscheiden, ob die antimikrobiell wirkende Komponente in das gesamte Dichtungsmaterial oder nur bereichsweise eingearbeitet wird.

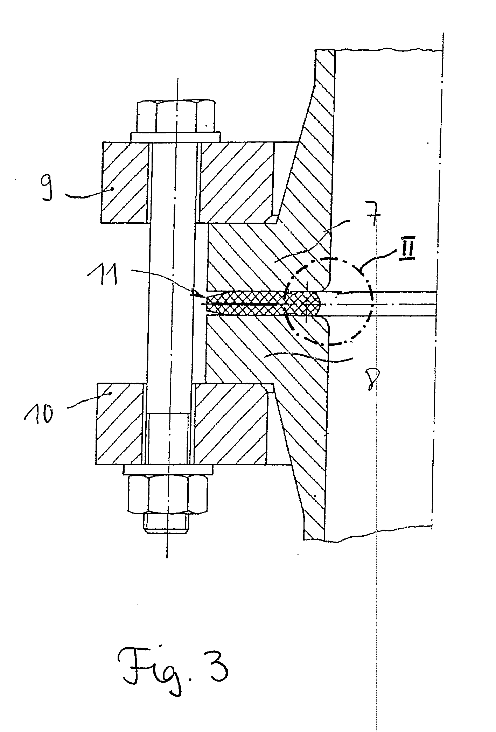

Die in Fig. 3 dargestellte Flanschverbindung besteht aus zwei Flanschen 7, 8 die mittels verspannter Flanschringe 9, 10 verbunden sind. Zwischen den einander zugewandten, völlig ebenen Dichtflächen der beiden Flansche 7, 8 befindet sich die Flanschdichtung 11.

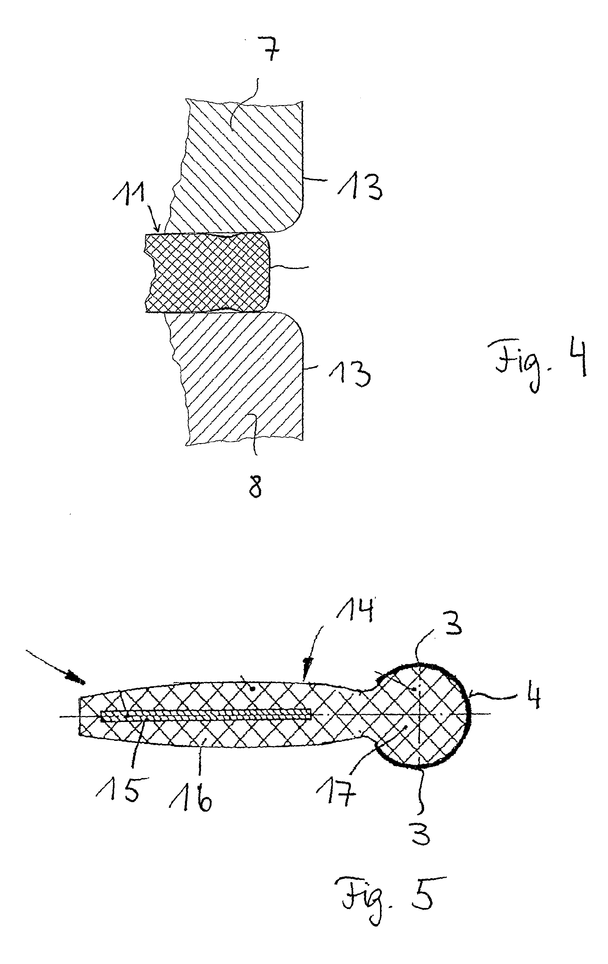

Üblicherweise kommt die Fläche 12 mit den Substanzen aus den entsprechenden chemischen Anlagen bzw. Anlagen der Nahrungsmittelindustrie in Kontakt (s. Fig. 5). In einer möglichen Ausgestaltung der vorliegenden Erfindung ist nur das in Richtung Rohr 13 gerichtete Ende der Dichtung 11 mit der antimikrobiell und/oder antifungizid wirkenden Komponente beaufschlagt.

Die in Fig. 3 dargestellte Flanschdichtung 5 setzt sich in der hier dargestellten Ausführungsform aus einem Grundkörper 14, der aus einer elastomeren Grundmasse hergestellt wird, sowie einem darin eingebetteten, ringförmigen Versteifungselement 15 zusammen. Das Versteifungselement 15 ist hierbei ein flacher Stahlring.

Im Querschnitt besteht der Grundkörper 14 aus einer leicht balligen Ringscheibe 16, in der sich in etwa mittig das Versteifungselement 15 befindet, sowie einem innen an der Ringscheibe 16 angeformten Dichtwulst 17. Der Dichtwulst 17 weist gegenüber der Dicke der Ringscheibe ein Übermaß auf, sodass er zwischen den beiden Flanschen eine größere Stauchung erhält als dies beim Material der Ringscheibe 16 der Fall ist. Die Hauptdichtwirkung wird daher über den innen liegenden Dichtwulst 17 herbeigeführt.

In Fig. 4 ist ferner dargestellt, dass die der Dichtwulst 17 mit seinen einander abgewandten Dichtflächen 3 und die nach innen weisende Fläche 6 mit antimikrobiell und/oder antifungizid wirkender Komponente 12 beaufschlagt sind. Es ist nicht unbedingt notwendig, dass die ntimikrobiell und/oder antifungizid wirkende Komponente eine geschlossene Beschichtung bildet, es ist ausreichend, wenn das Silber in einer Menge von 0,1 bis 10 µm Nanosilber pro cm² vorliegt.

In einer alternativen Ausführungsform wird die antimikrobiell und/oder antifungizid wirkende Komponente direkt in das Dichtungsmaterial eingearbeitet. Es ist dann, je nach Herstellungsprozess, gleichmäßig oder bereichsweise über das Dichtungsmaterial verteilt.

### Anwendungsbeispiele:

Ein Gummimischung, die 0,5 Gew.-% AgSiO₂ enthielt, wurde gemäß den im Arbeitsblatt W 270 des DVGW (11/2007) gegebenen Empfehlungen untersucht. Einzelheiten zu der Versuchsanordnung und zu den Prüfbedingungen sind diesem Arbeitsblatt zu entnehmen. Es wurden Prüfkörper mit einer Fläche von jeweils 400 cm² untersucht. Bei der Verwendung von je zwei Prüfkörpern pro Prüfperiode wurde folgendes Prüfschema zugrunde gelegt:
• monatliche Ernte des Bewuchses bei 1-Monatsproben (Prüfdauer insgesamt 3 Monate)
• Ernte nach 2 Monaten bei 2-Monatsproben (Prüfdauer insgesamt 2 Monate)
• Ernte nach 3 Monaten bei 3-Monatsproben (Prüfdauer insgesamt 3 Monate)

### Lagerbedingungen im Prüflabor bis zur Prüfung: bei Raumtemperatur

Vor Prüfbeginn wurden die Prüfkörper für 20 ± 1 h in fließendem Trinkwasser exponiert, mit 1%iger Chlorbleichlauge desinfiziert und (30 ± 3 min) mit Trinkwasser abgespült.

Die Exposition erfolgte über einen Zeitraum von insgesamt drei Monaten in Becken, die mit einer Durchflussrate von ca. 20 l/h Trinkwasser durchströmt wurden. Die Wassertemperatur lag dabei zwischen 14,5 °C und 16,5 °C. Nach ein, zwei und drei Monaten wurden die Prüfkörper sowie die entsprechenden Negativkontrollen (Edelstahl) und die Positivkontrollen (Paraffin) zur Untersuchung der mikrobiellen Bewuchsbildung abgeschabt. Der gesammelte Oberflächenbewuchs wurde in geeignete Zentrifugengläser überführt. Die Proben wurden zentrifugiert (3.000 x g, 10 Minuten) und danach die Ablesung des sedimentierten Bewuchsvolumens durchgeführt.

### Prüfergebnisse:

Die Positivkontrolle (Paraffin) wies in jeder Versuchsperiode mikrobiellen Bewuchs auf, lag jedoch ab der 2. Ernte mit Werten von 0,84 ml/ 800 cm² bis 0,12 ml/ 800 cm² unter der geforderten Mindestmenge von 1,5 ml/ 800 cm². Damit ist kein absolut einwandfreier Versuchsablauf laut W270 garantiert. Die Negativkontrolle wies keine Bewuchsbildung auf (Grenzwert: < 0,01 ml/ 800 cm²). Sie zeigte aber auf den Kontaktplatten Bakterien- und Pilzwachstum und entsprach damit den Anforderungen der Prüfmethode W270.

Auf den zu überprüfenden Werkstoffproben von jeweils 800 cm² getesteter Oberfläche pro Prüfkörper waren entsprechend DVGW-Arbeitsblatt W270 folgende Ergebnisse festzustellen:

### Volumen des Bewuchses/Material # 2

### (Einzelwerte und arithmetisches Mittel von jeweils 2 Prüfkörpern in ml/ bezogen auf 800 cm²)

| **Untersuchungs-beginn** | | **1-Monatswerte** | | **2-Monatswerte** | | **3-Monatswerte** |
|---|---|---|---|---|---|---|
| **23.09.2008** | **1a** | (0,55/0,55) | **2a** | | **3a** | |
| | | **0,55** | | (0,13/0,12) | | |
| | **1b** | (0,11/0,11) | | **0,125** | | (0,11/0,07) |
| | | **0,11** | | | | **0,09** |
| | **1c** | (0,04/0,05) | | | | |
| | | **0,045** | | | | |

### Grenzwerte [ml/800 cm²]

| | 1-Monatswert | 2-Monatswert | 3-Monatswert |
|---|---|---|---|
| Genereller Einsatz: | ≤ (0,05 + 0,02) | ≤ (0,05 + 0,02) | ≤ (0,05 + 0,02) |
| Alle Mittelwerte | | | |
| Großflächige | | | |
| Dichtungen (D 1): | ≤ (0,12 + 0,03) | ≤ (0,12 + 0,03) | ≤ (0,12 + 0,03) |
| Alle Mittelwerte | | | |
| Kleinflächige | | | |
| Dichtungen (D 2): | ≤ (0,20 + 0,03) | ≤ (0,20 + 0,03) | ≤ (0,20 + 0,03) |
| Alle Mittelwerte | | | |

### Bewertung:

Bei fachgerechter Verarbeitung ist der Werkstoff mit der Bezeichnung **Material # 2** nach den vorgenommenen Prüfungen in mikrobiologischer Hinsicht, entsprechend dem DVGW-Arbeitsblatt W 270 (11/2007), zum Einsatz als großflächige Dichtung - Kategorie D1 - und als kleinflächige Dichtung - Kategorie D2 - im Trinkwasserbereich geeignet.

### Bezugszeichenliste

- 1: Dichtung
- 2: Abzudichtende Fläche
- 3: Dichtfläche
- 4: antimikrobiell wirkende Komponente
- 5: Kern
- 6: Äußeres Material
- 7: Flansch
- 8: Flansch
- 9: Flanschring
- 10: Flanschring
- 11: Flanschdichtung
- 12: Nach innen weisende Fläche der Dichtung
- 13: Rohrwandung
- 14: Grundkörper der Dichtung
- 15: Versteifungselement
- 16: Ringscheibe
- 17: Dichtwulst

## Patentansprüche

1. Dichtelement zum Einsatz in wasserführenden Anlagen aus einem Dichtkörper auf Basis einer elastomeren Grundmasse mit daran ausgebildeter zur Anlage an der abzudichtenden Fläche bestimmte Dichtbereichen,
**dadurch gekennzeichnet,**
**dass** der Dichtkörper und/oder die Dichtbereiche (13) eine antimikrobiell und/oder antifungizid wirkende Komponente in feinteiliger Form aufweisen

2. Dichtung nach einem der Ansprüche 1 oder 2, **dadurch gekennzeichnet, dass** die die antimikrobiell wirkende Komponente als Wirkstoff ein Metall und/oder eine Metallverbindung ausgewählt aus Silber, Kupfer, Zink und Gemischen, deren Oxiden und beliebigen Gemischen der voranstehenden enthält oder daraus besteht.

3. Dichtelement nach Anspruch 1, **dadurch gekennzeichnet, dass** die antimikrobiell und/oder antifungizid wirkende Komponente in Form des Wirkstoffs selbst oder mit einem Matrixmaterial vorleigt und einen mittleren Teilchendurchmesser von 1 bis 100 nm, insbesondere von 5 bis 50 nm, aufweist.

4. Dichtung nach Anspruch 3, **dadurch gekennzeichnet, dass** die antimikrobiell und/oder antifungizid wirkende Komponente mit Siliziumdixoid, welches durch Sprüh- oder Flammenpyrolyse in Gegenwart des Metalls oder der Metallverbindung oder einer Vorstufe davon hergestellt worden ist, vorliegt.

5. Dichtung nach Anspruch 1 oder 2, **dadurch gekennzeichnet, dass** der Wirkstoff auf einen anorganischen Träger aufgebracht ist.

6. Dichtung nach Anspruch 1 oder 2, **dadurch gekennzeichnet, dass** der anorganische Träger ausgewählt ist aus Siliziumdioxid, Silikaten, Bentoniten und/oder Zeoliten.

7. Dichtung nach Anspruch 5 oder 6, **dadurch gekennzeichnet, dass** die mittlere Teilchengröße (bestimmt durch Laserverfahren) der antimikrobiell wirkenden Komponente zwischen 4 und 9 µm liegt.

8. Dichtung nach Anspruch 6 oder 7, **dadurch gekennzeichnet, dass** das Zeolit ausgewählt ist aus Zeolite vom A-Typ, X-Typ, Y-Typ, D-Typ, Zeolite mit hohem Siliciumdioxid-Anteil, Sodalit, Mordenit, Analcit, Clinoptilolit, Chabazit und/oder Erionit.

9. Dichtung nach einem der Ansprüche 6 bis 8, **dadurch gekennzeichnet, dass** die spezifische Oberfläche der Zeolitpartikel ≥ 150 m²/g, bezogen auf wasserfreies Zeolit als Standard, ist.

10. Dichtung nach einem der Ansprüche 6 bis 9, **dadurch gekennzeichnet, dass** das MolVerhältnis SiO₂/Al₂O₃ im Zeolit < 14, bevorzugt kleiner als 11 ist.

11. Dichtelement nach einem der Ansprüche 1 bis 10, **dadurch gekennzeichnet, dass** die elastomere Grundmasse ausgewählt ist aus natürlichen oder synthetischen Kautschukmassen, insbesondere auf Basis von von Acrylnitril oder Styrol und Butadien bzw. Butadienderivaten, insbesondere Acrylnitril-Butadien-Kautschuk, hydrierter Acrylnitril-Butadien-Kautschuk, Styrol-Butadien-Kautschuk, Ethylen-Propylen-Dien-Kautschuk und Mischungen der voranstehenden.

12. Dichtelement nach Anspruch 11, **dadurch gekennzeichnet, dass** das Dichtelement durch Press-, Spritz-, und/oder Extrudierverfahren hergestellt wird.

13. Dichtelement nach Anspruch 11, **dadurch gekennzeichnet, dass** das Metall und/oder die Metallverbindung vor der Verarbeitung der elastomeren Grundmasse in diese eingearbeitet wird.

14. Dichtelement nach einem der Ansprüche 1 bis 13, **dadurch gekennzeichnet, dass** die antimikrobiell und/oder antifungizid wirkende Komponente in einer Menge von 0,05 bis 1,5 Gew.-%, bezogen auf das Gewicht des Dichtelements und auf den reinen Wirkstoff ohne optional vorhandenen Träger, insbesondere von 0,1 bis 1 Gew.-%, beträgt.

15. Verwendung eines Compounds aus einem anorganischen Träger-/Matrixmaterial und einer antimikrobiell wirkenden Verbindung in einem Dichtelement zum Einsatz in wasserführenden Anlagen.
